# EUROPEAN PATENT APPLICATION

(11) **EP 4 529 055 A1**
(43) Date of publication of application: **26.03.2025**
(21) Application number: 23919263.6
(22) Date of filing: 29.06.2023
(51) Int. Cl.: H04K 3/00, H04W 16/28, H04W 56/00, H04W 72/0457

(54) **BASE STATION SIGNAL SHIELDING METHOD AND DEVICE, STORAGE MEDIUM, AND ELECTRONIC DEVICE**

(30) Priority: 01.02.2023 CN 202310127347
(71) Applicant: Zhejiang Sunwave Communications Technology Co., Ltd, Hangzhou, Zhejiang 310053 (CN)
(72) Inventor: CAO, Yongfu, Hangzhou, Zhejiang 310053 (CN); YANG, Jianfeng, Hangzhou, Zhejiang 310053 (CN); YUAN, Yongchao, Hangzhou, Zhejiang 310053 (CN)
(74) Representative: Zacco GmbH
(86) International application number: PCT/CN2023/104209
(87) International publication number: WO 2024/159698

(57) **Abstract**

The present disclosure discloses a method and an apparatus of shielding a base station signal, a storage medium, and an electronic apparatus. The method includes: searching for a base station signal sent by a target base station, wherein the target base station is a base station of which a communication connection is to be shielded; acquiring a synchronization signal from a current frame of the base station signal and extracting a target Physical Broadcast Channel (PBCH) block Synchronization Signal Block (SSB) resource set; generating a base station shielding signal according to the target SSB resource set; and continuously sending the base station shielding signal for a target duration in a case where an SSB resource set of a next frame of the base station signal is aligned. The present disclosure solves the problems in the related art of low shielding efficiency and high shielding power consumption of the base station signal.

## Description

The present application claims priority to Chinese Patent Application No. 202310127347.1, filed to the China National Intellectual Property Administration on February 01, 2023 and entitled " Method and Apparatus Of Shielding A Base Station Signal, Storage Medium, and Electronic Apparatus", the disclosure of which is hereby incorporated by reference in its entirety.

### Technical Field

The present disclosure relates to the technical field of mobile communications, and in particular, to a method and an apparatus of shielding a base station signal, a storage medium, and an electronic apparatus.

### Background

A mobile terminal shielding system may shield mobile terminals within a certain area and block the communication between the mobile terminal and a base station, and in recent years, has been widely used in anti-leak places such as examination rooms, prisons, public security, government departments, and confidential conference rooms. At present, the existing technology mostly uses a conventional suppression type interference system to achieve base station signal shielding, and the principle is as follows: a white noise signal is generated in a mobile communication frequency band, amplified by a power amplifier and then sent to an air interface (which defines a wireless transmission specification between the base station and a mobile phone) to implement suppression interference. However, in order to achieve the effect of suppressing interference, the system often requires a high-gain power amplifier to boost the transmitting power. This system has high transmitting power but poor shielding effect, which cannot meet the requirements for shielding efficiency.

For the above problems, no effective solution has been proposed.

### Summary

Embodiments of the present disclosure provide a method and an apparatus of shielding a base station signal, a storage medium, and an electronic apparatus, so as to at least solve the problems in the related art of low shielding efficiency and high shielding power consumption of a base station signal.

According to one aspect of the embodiments of the present disclosure, a base station signal shielding method is provided, including: searching for a base station signal sent by a target base station, where the target base station is a base station of which a communication connection is to be shielded; acquiring a synchronization signal from a current frame of the base station signal and extracting a target Physical Broadcast Channel (PBCH) block Synchronization Signal Block (SSB) resource set; generating a base station shielding signal according to the target SSB resource set; and continuously sending the base station shielding signal for a target duration in a case where an SSB resource set of a next frame of the base station signal is aligned.

Optionally, in one exemplary embodiment, the operation of generating a base station shielding signal according to the target SSB resource set includes: determining an initial shielding signal according to the target SSB resource set; and amplifying a power of the initial shielding signal to a target power to obtain the base station shielding signal, where the target power is a power of an SSB with the maximum power in the target SSB resource set.

Optionally, in one exemplary embodiment, the operation of determining an initial shielding signal according to the target SSB resource set includes: extracting, in a case where the target SSB resource set includes an SSB resource set of each of a plurality of base stations, a mixed SSB resource set including a plurality of SSBs from the SSB resource set of each of the plurality of base stations as the initial shielding signal; and determining an SSB resource set of one base station to be the initial shielding signal in a case where the target SSB resource set is the SSB resource set of the one base station.

Optionally, in one exemplary embodiment, the operation of amplifying a power of the initial shielding signal to a target power to obtain the base station shielding signal includes: determining the target power from the target SSB resource set according to a signal attribute of the base station signal sent by the target base station; and amplifying the power of the initial shielding signal to the target power to obtain the base station shielding signal.

Optionally, in one exemplary embodiment, the operation of amplifying the power of the initial shielding signal to the target power to obtain a base station shielding signal includes: extracting other SSBs except the SSB with the maximum power from the initial shielding signal; amplifying the power of the other SSBs to the target power to obtain other target SSBs; and integrating the SSB with the maximum power and the other target SSBs into the base station shielding signal.

Optionally, in one exemplary embodiment, the operation of continuously sending the base station shielding signal for a target duration in a case where an SSB resource set of a next frame of the base station signal is aligned includes at least one of the following: sending the base station shielding signal in advance by 1/4 of symbol time and continuously sending the base station shielding signal for the target duration in a case where the SSB resource set of the next frame of the base station signal is aligned, where the target duration is greater than or equal to an SSB period of the target base station; and sending the base station shielding signal with a delay of 1/4 of symbol time and continuously sending the base station shielding signal for the target duration in a case where the SSB resource set of the next frame of the base station signal is aligned, where the target duration is greater than or equal to the SSB period of the target base station.

According to another aspect of the embodiments of the present disclosure, a base station signal shielding apparatus is further provided, including: a search module, configured to search for a base station signal sent by a target base station, where the target base station is a base station of which a communication connection is to be shielded; an extraction module, configured to acquire a synchronization signal from a current frame of the base station signal and extract a target PBCH block SSB resource set; a generation module, configured to generate a base station shielding signal according to the target SSB resource set; and a sending module, configured to continuously send the base station shielding signal for a target duration in a case where an SSB resource set of a next frame of the base station signal is aligned.

According to another aspect of the embodiments of the present disclosure, a computer-readable storage medium is further provided, in which a computer program is stored. The computer program is configured to perform the above base station signal shielding method when running.

According to another aspect of the embodiments of the present disclosure, an electronic apparatus is further provided, including: a memory, a processor, and a computer program stored in the memory and runnable on the processor. The processor performs the above base station signal shielding method through the computer program.

In the present disclosure, in a case of detecting that a shielding function is activated, the base station signal sent by the target base station of which a communication signal is to be shielded corresponding to a current location is searched first, and then the synchronization signal is acquired from the current frame of the base station signal and the target PBCH block SSB resource set is extracted, thereby generating the base station shielding signal according to the target SSB resource set, and then the base station shielding signal for shielding the communication of the target base station is continuously sent for the target duration in a case where the SSB resource set of the next frame of the base station signal is aligned. That is to say, when the shielding function is activated, the synchronization signal in the current frame of the base station signal sent by the target base station of which a communication signal is to be shield is acquired and the target PBCH block SSB resource set is extracted, thereby generating the base station shielding signal according to the target SSB resource set, and then the base station shielding signal is continuously sent for the target duration in a case where the SSB resource set of the next frame of the base station signal is aligned, thereby achieving the shielding of a wireless signal sent by the target base station by continuously sending a frame synchronization signal in the base station signal sent by the target base station, so that the signal for communication shielding of the target base station comes from the target base station, which not only does not generate additional contaminated signals, but also can achieve a better shielding effect, thereby solving the problems in the related art of low shielding efficiency and high shielding power consumption of the base station signal, and achieving the technical effect of not only improving the shielding efficiency of the base station signal but also reducing the shielding power consumption.

### Brief Description of the Drawings

The accompanying drawings, which are incorporated in and constitute a part of this specification, illustrate embodiments consistent with the present disclosure and, together with the specification, serve to explain the principles of the present disclosure.

In order to more clearly illustrate the embodiments of the present disclosure or the technical solutions in the related art, the accompanying drawings used in the description of the embodiments or the related art will be briefly described below. It is apparent that other accompanying drawings may further be obtained by those of ordinary skill in the art according to these accompanying drawings without creative efforts.
Fig. 1 is a schematic diagram of a hardware environment of a method of shielding a base station signal according to an embodiment of the present disclosure.
Fig. 2 is a flowchart of a method of shielding a base station signal according to an embodiment of the present disclosure.
Fig. 3 is a flowchart of a process of shielding a base station signal according to an embodiment of the present disclosure.
Fig. 4 is a schematic diagram of a manner of shielding a base station signal according to an embodiment of the present disclosure.
Fig. 5 is a structural block diagram of an apparatus of shielding a base station signal according to an embodiment of the present disclosure.

### Detailed Description of the Embodiments

In order to enable those skilled in the art to better understand the solutions of the present disclosure, the technical solutions in the embodiments of the present disclosure will be clearly and completely described below in combination with the drawings in the embodiments of the present disclosure. It is apparent that the described embodiments are only part of the embodiments of the present disclosure, not all the embodiments. All other embodiments obtained by those of ordinary skill in the art on the basis of the embodiments in the present disclosure without creative work shall fall within the scope of protection of the present disclosure.

It is to be noted that the terms "first", "second" and the like in the specification, claims and the above drawings of the present disclosure are used for distinguishing similar objects rather than describing a specific sequence or a precedence order. It should be understood that the data used in such a way may be exchanged where appropriate, in order that the embodiments of the present disclosure described here can be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

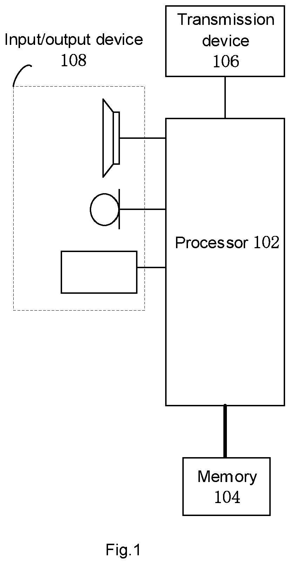

The method embodiment provided by the embodiments of the present disclosure may be performed in a computer terminal, a device terminal or a similar computing apparatus. Taking running on the computer terminal as an example, Fig. 1 is a schematic diagram of a hardware environment of a method of shielding a base station signal according to an embodiment of the present disclosure. As shown in Fig. 1, the computer terminal may include one or more (only one shown in Fig. 1) processors 102 (the processors 102 may include, but are not limited to, a Micro Processor Unit (MCU) or a Field Programmable Gate Array (FPGA), and other processing devices), and a memory 104 for storing data. In one exemplary embodiment, the computer terminal may further include a transmission device 106 with a communication function and an input/output device 108. Those of ordinary skill in the art may understand that the structure shown in Fig. 1 is only schematic and not intended to limit the structure of the computer terminal. For example, the computer terminal may further include more or fewer components than those shown in Fig. 1, or has a different configuration with equivalent or more functions than those shown in Fig. 1.

The memory 104 may be configured to store a computer program, for example, a software program of application software and modules, such as a computer program corresponding to a base station signal shielding method in the embodiments of the present disclosure. The processor 102 runs the computer program stored in the memory 104 to perform various functional applications and data processing, that is, to implement the above method. The memory 104 may include a high speed Random Access Memory (RAM) and may further include a non-volatile memory such as one or more magnetic storage apparatuses, a flash memory, or other non-volatile solid state memories. In some examples, the memory 104 may further include memories remotely set relative to the processor 102, which may be connected to the computer terminal through a network. Examples of the above network include, but are not limited to, the Internet, the Intranet, a local area network, a mobile communication network, and combinations thereof.

The transmission module 106 is configured to receive or transmit data through a network. A specific example of the network may include a wireless network provided by a communication provider of the computer terminal. In one example, the transmission device 106 includes a Network Interface Controller (NIC) that may be connected to other network devices through a base station to communicate with the Internet. In one example, the transmission device 106 may be a Radio Frequency (RF) module, which is configured to communicate with the Internet in a wireless manner.

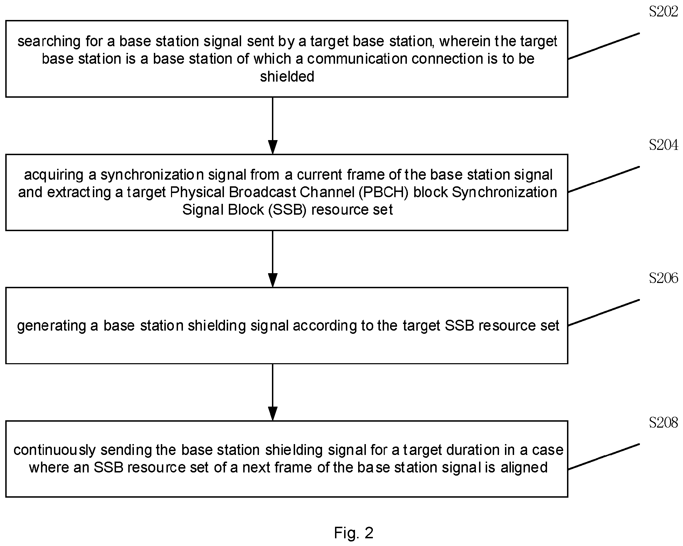

In the embodiment, a base station signal shielding method is provided, which is applied to the above computer terminal. Fig. 2 is a flowchart of a method of shielding a base station signal according to an embodiment of the present disclosure, and the flow includes the following steps.

At S202, a base station signal sent by a target base station is searched, where the target base station is a base station of which a communication connection is to be shielded.

At S204, a synchronization signal is acquired from a current frame of the base station signal and a target PBCH block SSB resource set is extracted.

At S206, a base station shielding signal is generated according to the target SSB resource set.

At S208, the base station shielding signal is continuously sent for a target duration in a case where an SSB resource set of a next frame of the base station signal is aligned.

Through the above steps, in a case of detecting that a shielding function is activated, the base station signal sent by the target base station of which a communication signal is to be shield corresponding to a current location is searched first, and then the synchronization signal is acquired from the current frame of the base station signal and the target PBCH block SSB resource set is extracted, thereby generating the base station shielding signal according to the target SSB resource set, and then the base station shielding signal for shielding the communication of the target base station is continuously sent for the target duration in a case where the SSB resource set of the next frame of the base station signal is aligned. That is to say, when the shielding function is activated, the synchronization signal in the current frame of the base station signal sent by the target base station of which a communication signal is to be shield is acquired and the target PBCH block SSB resource set is extracted, thereby generating the base station shielding signal according to the target SSB resource set, and then the base station shielding signal is continuously sent for the target duration in a case where the SSB resource set of the next frame of the base station signal is aligned, thereby achieving the shielding of a wireless signal sent by the target base station by continuously sending a frame synchronization signal in the base station signal sent by the target base station, so that the signal for communication shielding of the target base station comes from the target base station, which not only does not generate additional contaminated signals, but also can achieve a better shielding effect, thereby solving the problems in the related art of low shielding efficiency and high shielding power consumption of the base station signal, and achieving the technical effect of not only improving the shielding efficiency of the base station signal but also reducing the shielding power consumption.

Optionally, in the embodiment, the above base station signal shielding method may be applied to, but is not limited to, a shielding system, for example, in a system of a mobile device, and the communication between the mobile device and the base station is cut off by the shielding system. The method may also be applied to a device having a base station signal shielding function, and the device shields the signal sent by the base station to cut off the communication between the mobile device and the base station.

Optionally, in the embodiment, the above base station signal shielding method may be applied to, but is not limited to, a 5G New Radio (NR) (a global 5G standard for an NR design based on Orthogonal Frequency Division Multiplexing (OFDM)) system, for example, the method may be applied to information security protection in anti-leak places such as examination rooms, prisons, public security, government departments, and confidential meeting rooms in the 5G era.

Optionally, in the embodiment, the above base station signal shielding method may be applied to, but is not limited to, a process of signal connection between the mobile device and the base station, in which the signal connection between the base station and the mobile device is cut off, so that the mobile device cannot receive the signal sent by the base station, thereby shielding the base station signal.

In the technical solution provided in the above S202, the above shielding function may be, but is not limited to, manually activated, for example, when a worker needs to use the shielding function, the worker activates the shielding function, and performs communication shielding on the range to be shielded. The shielding function may also be automatically activated at a preset time point, for example, the time point when the shielding function needs to be activated is determined, and when the time point is reached, the shielding function is automatically activated, which enhances the convenience of the shielding function, that is, the function can be used without manual operation.

Optionally, in the embodiment, the target base station is configured to transmit information between a mobile communication exchange center and the mobile terminal, and includes: a 5G base station, a 4G (the 4th generation mobile communication technology) base station, etc. The target base station may be, but is not limited to, determined according to a location of an apparatus where the above base station communication shielding method is deployed, for example, the shielding function is activated, that is, a wireless signal can be detected, at this time, the base station that sends the wireless signal corresponding to the detected wireless signal is the target base station.

Optionally, in the embodiment, the base station signal may be, but is not limited to, one or more signals sent by one or more base stations.

In the technical solution provided in the above S204, the above target PBCH block SSB resource set may be, but is not limited to, a specific signal sequence carried in the wireless signal, for example, taking the 5G base station as an example, a receiving channel is opened to receive the wireless signal sent by the base station. According to the principle of the 5G communication specification, the SSB in the 5G wireless signal is identifiable, so that the SSB signal may be searched for the wireless signal. At this time, the signal sequence of the SSB in the 5G wireless signal is the target PBCH block SSB resource set.

Optionally, in the embodiment, the above target PBCH block SSB resource set may be, but is not limited to, a full frame of the specific signal sequence carried in the wireless signal, for example, taking the reception of the SSB sent by the 5G base station as an example, the full frame containing the SSB, or a duration of an SSB period (currently the SSB period is 20 milliseconds (i.e., 2 frames)) is received, which contains a half frame of the SSB, or a half frame of the specific signal sequence carried in the wireless signal, for example, the half frame includes a plurality of SSBs.

In the technical solution provided in the above S206, the above base station shielding signal is configured to cover the signal sent by the target base station, for example, since a radio frame (i.e., the above base station shielding signal) of the SSB frame signal is forwarded at the time of aligning the next frame, the target frame synchronization signal can cover the base station signal, so that the signal received by the mobile device is the expired signal of the previous frame of the signal sent by the base station.

Optionally, in the embodiment, the above target SSB resource set may include, but is not limited to, a Primary Synchronization Signal (PSS), a Secondary Synchronization Signal (SSS), and a PBCH. The PBCH includes a Demodulation Reference Signal (DM-RS). When User Equipment (UE) accesses an NR system, the PSS and the SSS are detected first to obtain downlink time and frequency synchronization and Physical Cell Identity (PCID), and then the PBCH is decoded. The PBCH includes a Master Information Block (MIB) and other information related to the transmission time of the SSB. The MIB carries part of the minimum system information required for the UE to access the NR system.

Optionally, in the embodiment, the plurality of SSBs may constitute the above target SSB resource set, and the above target SSB resource set may be, but is not limited to, periodically transmitted (the period may be 5, 10, 20 milliseconds, etc.).

Optionally, in one exemplary embodiment, the base station shielding signal may be generated according to the target SSB resource set in the following manner, which includes, but is not limited to, determining an initial shielding signal according to the target SSB resource set; and amplifying a power of the initial shielding signal to a target power to obtain the base station shielding signal, where the target power is the power of an SSB with the maximum power in the target SSB resource set.

Optionally, in the embodiment, the initial shielding signal may be determined, but not limited to, according to the target SSB resource set, for example, a PSS-SSS-PBCH signal sequence of a base station (radio) frame of the 5G base station is used to find a time domain carrier RF signal feature PSS search of a base station service, when the SSB is found, synchronization is acquired, the base station (radio) frame signal (the frame with a frequency bandwidth that is exactly the width of the SSB) of the service is extracted by identifying and determining a 5G corresponding filter with the corresponding bandwidth (just receiving the SSB signal bandwidth) for reception, storage and retention, then the power of a weak beam SSB signal of the SSB (5G multi-beam situation) of a weak signal is appropriately boosted, and forwarding (frame alignment) is used to shield the base station signal.

Optionally, in the embodiment, the above target duration may be, but is not limited to, manually set, for example, if the signal period of the frame synchronization signal of the target base station is known, the target duration for storing the initial frame synchronization signal may be adjusted according to, but not limited to, the reaction time of the signal base station and the apparatus where the above base station communication shielding method is deployed. For example, a 5-millisecond half frame including only the SSB resource set is used and the signal strength of the weaker beam (SSB) is appropriately improved, the period of the SSB resource set is changed to 5 milliseconds, that is, forwarding (the half frame) at a 5-millisecond period, and 1/4 of symbol time (relative to a base station frame signal synchronization clock difference) may also be delayed (or advanced).

Optionally, in the embodiment, the initial shielding signal may be amplified to the target power before being stored, but is not limited thereto. Or, the initial shielding signal is stored first and then amplified to the above base station shielding signal. Since the amplification is not performed during storage, the storage space is saved.

In one exemplary embodiment, the initial shielding signal may be determined according to the target SSB resource set in the following manner, which includes, but is not limited to, extracting, in a case where the target SSB resource set includes an SSB resource set of each of a plurality of base stations, a mixed SSB resource set including a plurality of SSBs from the SSB resource set of each of the plurality of base stations as the initial shielding signal; and determining an SSB resource set of one base station to be the initial shielding signal in a case where the target SSB resource set is the SSB resource set of the one base station.

Optionally, in the embodiment, the SSB resource sets between the base stations are time-aligned at a transmitting port, and the SSBs of each sequence are also individually aligned for beam search and switching. That is, the SSBs with the same sequence number of each base station are received at the same time (almost at the same time) and are mixed together (received by a shielding device). The mixed SSB resource set includes a total set of SSBs (mixed SSBs) of each sequence number. For a single base station, the SSB resource set is generated sequentially by the plurality of SSBs, with a time length of less than 5 milliseconds (half frame), and the SSB is configured for beam coverage.

Optionally, in the embodiment, for the 5G standard, the duration of the SSB resource set of the base station is less than the half frame (5 milliseconds), and the SSB resource time between networked (large network) base stations is uniformly aligned (considering switching, etc.); and generally there is no misaligned SSB resource sets (misaligned and unable to switch to become an isolated station). The actual network may have the half frame containing the SSB resource set, and the full frame (the other half frame does not contain the SSB resource set), or a double frame (20 milliseconds) (but only containing one SSB resource set) (when the SSB period is 20 milliseconds).

Optionally, in the embodiment, the receiving channel is opened, a receiving search is performed according to the principle of the 5G communication specification to find an identifiable PSS signal, and once found, receiving synchronization and digital storage of the received signal are turned on accordingly (the receiving frequency bandwidth is the same as the bandwidth of the SSB resource set), including all beams (PSS, SSS, and PBCH).

Optionally, in the embodiment, the plurality of beams included in the initial shielding signal may be, but are not limited to, of different powers. The power of each beam in the initial frame synchronization signal may be, but is not limited to, obtained, and the power of non-maximum power beams may be boosted to achieve the effect of improving the adaptability of shielding to the beam difference.

Optionally, in the embodiment, the SSB resource set may include, but is not limited to, the PSS, the SSS, and the PBCH. The PBCH includes the DM-RS. When the UE accesses the NR system, the PSS and the SSS are detected first to obtain the downlink time and frequency synchronization and the PCID, and then the PBCH is decoded. The PBCH includes the MIB and other information related to the transmission time of the SSB. The MIB carries part of the minimum system information required for the UE to access the NR system.

Optionally, in one exemplary embodiment, a power of the initial shielding signal may be amplified to a target power to obtain the base station shielding signal in the following manner, which includes, but is not limited to, determining the target power from the target SSB resource set according to a signal attribute of the base station signal sent by the target base station; and amplifying the power of the initial shielding signal to the target power to obtain the base station shielding signal.

Optionally, in the embodiment, the forwarded signal is stronger than the base station signal, and the information received by the mobile phone after demodulation is the information carried by the forwarded signal. Although this forwarded signal is also taken from the base station, it is an expired signal (such as a system frame number), and is not the same as the signal currently transmitted by the base station, including different intensities, quantities (short SSB period) and time domains (difference of 1/4 of symbol time), which may cause obstacles for the mobile phone to receive the base station signal.

Optionally, in the embodiment, the weak SSB may be, but is not limited to, enhanced, so as to boost the shielding power when shielding across beams (such as adjacent beams) to improve the shielding effect. The benefit of delayed or early transmission is that the synchronization between the mobile phone and the base station may be affected.

Optionally, in one exemplary embodiment, the power of the initial shielding signal may be amplified to the target power to obtain the base station shielding signal in the following manner, which includes, but is not limited to, extracting other SSBs except the SSB with the maximum power from the initial shielding signal; amplifying the power of the other SSBs to the target power to obtain other target SSBs; and integrating the SSB with the maximum power and the other target SSBs into the base station shielding signal.

Optionally, in the embodiment, for the SSBs whose frequency bands include a plurality of base station frequencies and are not aligned and run synchronously, the frequency bands may be, but is not limited to, determined separately, and then frequency band RF signals are synthesized for shielding.

Optionally, in the embodiment, 5G and 4G processing in the same frequency band (4G may also use SSB resource storage and forwarding technology) may be extracted separately, transmitted separately, or transmitted in a combined channel.

Optionally, in the embodiment, periodic refresh may achieve clock synchronization and adapt to slow changes in a signal source (update, etc.) and changes in path loss to a certain extent.

In the technical solution provided in the above S208, the target duration of continuously sending the base station shielding signal in a case where the SSB resource set of the next frame of the base station signal is aligned and a duration of detecting the radio signal sent by the target base station may be, but is not limited to, the same duration, which may be, but is not limited to, configured to ensure that the wireless signal sent by the same target base station is shielded, thereby improving the accuracy of shielding.

In one exemplary embodiment, the base station shielding signal may be continuously sent for the target duration in a case where the SSB resource set of the next frame of the base station signal is aligned in one of the following manners, which include, but are not limited to, sending the base station shielding signal in advance by 1/4 of symbol time and continuously sending the base station shielding signal for the target duration in a case where the SSB resource set of the next frame of the base station signal is aligned, where the target duration is greater than or equal to the SSB period of the target base station; and sending the base station shielding signal with a delay of 1/4 of symbol time and continuously sending the base station shielding signal for the target duration in a case where the SSB resource set of the next frame of the base station signal is aligned, where the target duration is greater than or equal to the SSB period of the target base station.

Optionally, in the embodiment, in order to achieve a better effect, the signal transmission time may be appropriately offset, such as delaying or advancing the base station signal for (1/4 of symbol time, such as 8 microseconds, and a plurality of half frames as a period) for sending (the half frame of the SSB resource set) (5G multi-beam containing SSBs corresponding to the number of beams).

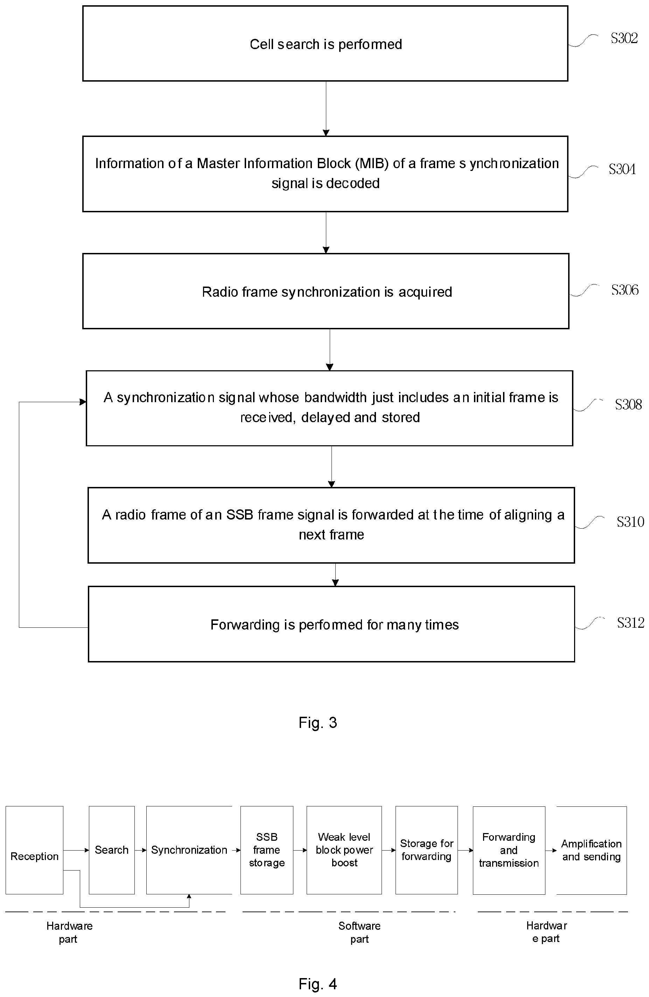

In one optional embodiment, a process of shielding a base station signal is provided, and Fig. 3 is a flowchart of a process of shielding a base station signal according to an embodiment of the present disclosure. As shown in Fig. 3, taking the shielding of a 5G base station signal as an example, the carrier frequency range supported by the R15 standard of NR is up to 52.6 GHz. The propagation loss of high-frequency band carriers is large, and the coverage distance of wireless signals need to be increased in a beamforming transmission manner. Since the angle covered by each beam is limited, NR covers the service range of the entire cell through beam scanning. Beam scanning refers to sending physical channels or reference signals by using beams in different directions at different times. A cell usually needs to send a plurality of SSBs to complete a beam scan, so that a synchronization signal covers the service range of the entire cell. The SSBs required to complete a beam scan constitute an SSB burst set. NR only supports Time-Division Multiplexing (TDM) for SSB beam scanning, but not Frequency-Division Multiplexing (FDM). The reason is that the SSB needs to be received by all UE in a system, and FDM is not suitable for the UE using analog beamforming. The following is a communication shielding process of the base station.

At S302, cell search is performed.

At S304, information including an MIB of the SSB (frame synchronization signal) is decoded.

At S306, radio frame synchronization is acquired.

At S308, a radio frame whose bandwidth just includes each SSB signal is received, delayed and stored.

At S310, the radio frame of an SSB frame signal is forwarded at the time of aligning a next frame.

At S312, forwarding is performed for many times.

At S314, after enough time, S304 is returned and continuous operation starts from S304 to S314.

The above implementation takes the 5G base station as an example. The 5G multi-beam contains SSBs corresponding to the number of beams. The SSB burst set is a set of SSBs in a half frame. The NR synchronization block (SSB) includes a PSS, an SSS, and a PBCH. The PBCH includes a DM-RS. When the UE accesses an NR system, the PSS and the SSS are detected first to obtain downlink time and frequency synchronization and PCID, and then the PBCH is decoded. The PBCH includes the MIB and other information related to the transmission time of the SSB. The MIB carries part of the minimum system information required for the UE to access the NR system. The plurality of SSBs constitute the SSB burst set SSB Burst, which is transmitted periodically. Corresponding to 4G, the PSS, SSS, and PBCH (corresponding to a bandwidth of 1.08 MHz) are also the corresponding SSBs.

The interference signal strength generated by a shielding device in the above process only needs to be 3 dB greater than the signal strength of a 5G public network to completely achieve signal shielding, which does not interfere with a 5G uplink signal and has no impact on the base station. In addition, the emitted interference signal only occupies a small amount of time and frequency resources, which may greatly reduce the power of the shielding device, and is environmentally friendly and efficient.

In one optional implementation, a manner of shielding a base station communication is provided. Fig. 4 is a schematic diagram of a manner of shielding a base station communication according to an embodiment of the present disclosure. As shown in Fig. 4, taking the shielding of a 5G base station signal as an example, first, a signal sent by a 5G base station is received, a PSS-SSS-PBCH signal sequence of a base station (radio) frame of the 5G base station is used to find a time domain carrier RF signal feature PSS search of a base station service, when the SSB is found, synchronization is acquired, the base station (radio) frame signal (the frame with a frequency bandwidth that is exactly the width of the SSB) of the service is extracted by identifying and determining a 5G corresponding filter with the corresponding bandwidth (just receiving the SSB signal bandwidth) for reception, storage and retention, then the power of a weak beam SSB signal of the SSB (5G multi-beam situation) of a weak signal is appropriately boosted, and forwarding (frame alignment) is used to shield the base station signal.

First, since the strength of the interference signal (target frame synchronization signal) only needs to be 3 dB greater than the signal strength of the 5G public network to completely shield the 5G base station signal, and the interference signal (target frame synchronization signal) does not interfere with the 5G uplink signal, and has no additional impact on the original signal of the base station, the interference signal (target frame synchronization signal) only needs to occupy a small amount of time and frequency resources, which may greatly reduce the power of the shielding device deployed with the above base station communication shielding method, and is environmentally friendly and efficient. Secondly, the same processing can be performed on the base station signals of all frequencies that need to be shielded, so that the shielding efficiency through this method is higher and more stable and the shielding range is larger, and the device may achieve a longer life due to reduced power consumption, thereby saving the cost of use.

Through the above description of implementations, those skilled in the art may clearly know that the method according to the above embodiments may be implemented by means of software plus a necessary common hardware platform, certainly by means of hardware; but in many cases, the former is the better implementation. Based on such understanding, the technical solution of the present disclosure, which is essential or contributes to the conventional art, may be embodied in the form of a software product. The computer software product is stored in a storage medium (such as a Read-Only Memory (ROM)/RAM, a magnetic disk and an optical disc), including a number of instructions for causing a terminal device (which may be a mobile phone, a computer, a server, or a network device, etc.) to perform the methods described in various embodiments of the present disclosure.

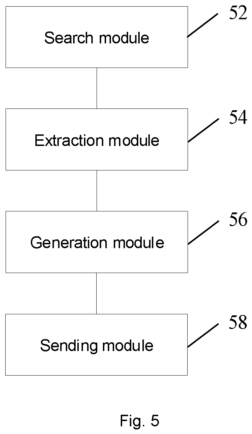

In the embodiment, an apparatus of shielding a base station signal is further provided. Fig. 5 is a structural block diagram of an apparatus of shielding a base station signal according to an embodiment of the present disclosure. As shown in Fig. 5, the apparatus includes: a search module 52, an extraction module 54, a generation module 56, and a sending module 58.

The search module 52 is configured to search for a base station signal sent by a target base station, where the target base station is a base station of which a communication connection is to be shielded.

The extraction module 54 is configured to acquire a synchronization signal from a current frame of the base station signal and extract a target PBCH block SSB resource set.

The generation module 56 is configured to generate a base station shielding signal according to the target SSB resource set.

The sending module 58 is configured to continuously send the base station shielding signal for a target duration in a case where an SSB resource set of a next frame of the base station signal is aligned.

Through the above apparatus, in a case of detecting that a shielding function is activated, the base station signal sent by the target base station of which a communication signal is to be shield corresponding to a current location is searched first, and then the synchronization signal is acquired from the current frame of the base station signal and the target PBCH block SSB resource set is extracted, thereby generating the base station shielding signal according to the target SSB resource set, and then the base station shielding signal for shielding the communication of the target base station is continuously sent for the target duration in a case where the SSB resource set of the next frame of the base station signal is aligned. That is to say, when the shielding function is activated, the synchronization signal in the current frame of the base station signal sent by the target base station of which a communication signal is to be shield is acquired and the target PBCH block SSB resource set is extracted, thereby generating the base station shielding signal according to the target SSB resource set, and then the base station shielding signal is continuously sent for the target duration in a case where the SSB resource set of the next frame of the base station signal is aligned, thereby achieving the shielding of a wireless signal sent by the target base station by continuously sending a frame synchronization signal in the base station signal sent by the target base station, so that the signal for communication shielding of the target base station comes from the target base station, which not only does not generate additional contaminated signals, but also can achieve a better shielding effect, thereby solving the problems in the related art of low shielding efficiency and high shielding power consumption of the base station signal, and achieving the technical effect of not only improving the shielding efficiency of the base station signal but also reducing the shielding power consumption.

In one exemplary embodiment, the generation module includes: a determination unit and an amplification unit.

The determination unit is configured to determine an initial shielding signal according to the target SSB resource set.

The amplification unit is configured to amplify the power of the initial shielding signal to the target power to obtain the base station shielding signal, where the target power is a power of an SSB with the maximum power in the target SSB resource set.

In one exemplary embodiment, the determination unit is configured to extract, in a case where the target SSB resource set includes an SSB resource set of each of a plurality of base stations, a mixed SSB resource set including a plurality of SSBs from the SSB resource set of each of the plurality of base stations as the initial shielding signal; and determine an SSB resource set of one base station to be the initial shielding signal in a case where the target SSB resource set is the SSB resource set of the one base station.

In one exemplary embodiment, the amplification unit is configured to determine the target power from the target SSB resource set according to a signal attribute of the base station signal sent by the target base station; and amplify the power of the initial shielding signal to the target power to obtain the base station shielding signal.

In one exemplary embodiment, the amplification unit is configured to extract other SSBs except the SSB with the maximum power from the initial shielding signal; amplify the power of the other SSBs to the target power to obtain other target SSBs; and integrate the SSB with the maximum power and the other target SSBs into the base station shielding signal.

In one exemplary embodiment, the sending module includes: a first sending unit and a second sending unit.

The first sending unit is configured to send the base station shielding signal in advance by 1/4 of symbol time and continuously sending the base station shielding signal for the target duration in a case where the SSB resource set of the next frame of the base station signal is aligned, where the target duration is greater than or equal to an SSB period of the target base station.

The second sending unit is configured to send the base station shielding signal with a delay of 1/4 of symbol time and continuously sending the base station shielding signal for the target duration in a case where the SSB resource set of the next frame of the base station signal is aligned, where the target duration is greater than or equal to the SSB period of the target base station.

It is to be noted that, each of the above modules may be realized by software or hardware. For the latter, the each of the above modules may be realized by, but is not limited to, the following way: all of the above modules are in the same processor; or, the above modules are respectively in different processors in form of any combination.

The embodiments of the present disclosure further provide a storage medium, including a stored program. The program performs any of the above methods when running.

Optionally, in the embodiment, the storage medium may be configured to store a program code for executing the following steps.

At S1, a base station signal sent by a target base station is searched, where the target base station is a base station of which a communication connection is to be shielded.

At S2, a synchronization signal is acquired from a current frame of the base station signal and a target PBCH block SSB resource set is extracted.

At S3, a base station shielding signal is generated according to the target SSB resource set.

At S4, the base station shielding signal is continuously sent for a target duration in a case where an SSB resource set of a next frame of the base station signal is aligned.

In one exemplary embodiment, the computer-readable storage medium may include, but is not limited to, a U disk, an ROM, an RAM, a mobile hard disk, a magnetic disk, a compact disc, and other media capable of storing the computer program.

The embodiments of the present disclosure further provide an electronic apparatus, which includes a memory and a processor. The memory stores a computer program. The processor is configured to run the computer program to execute the steps in any of the above method embodiments.

Optionally, the electronic apparatus may further include a transmission device and an input/output device. The transmission device is connected with the processor, and the input/output device is connected with the processor.

Optionally, in the embodiment, the processor may be configured to execute the following steps through the computer program.

At S1, a base station signal sent by a target base station is searched, where the target base station is a base station of which a communication connection is to be shielded.

At S2, a synchronization signal is acquired from a current frame of the base station signal and a target PBCH block SSB resource set is extracted.

At S3, a base station shielding signal is generated according to the target SSB resource set.

At S4, the base station shielding signal is continuously sent for a target duration in a case where an SSB resource set of a next frame of the base station signal is aligned.

Optionally, the specific examples in this embodiment may refer to the above embodiments and the examples described in the optional implementations, which will not be elaborated herein.

It is apparent that those skilled in the art should appreciate that the above modules and steps of the present disclosure may be implemented by a general-purpose computing device, and they may be centralized in a single computing device or distributed on a network composed of multiple computing devices; they may be implemented by a program code which is capable of being executed by the computing device, so that they may be stored in a storage device and executed by the computing device; and in some situations, the presented or described steps may be executed in an order different from that described here; or they are made into integrated circuit modules, respectively; or multiple modules and steps of them are made into a single integrated circuit module to realize. Therefore, the present disclosure is not limited to any particular combination of hardware and software.

The above is only the preferred embodiments of the present disclosure, and is not intended to limit the present disclosure, and for those of ordinary skill in the art, various modifications and changes may be made to the present disclosure. Any modifications, equivalent substitutions, improvements, etc. within the principle of the present disclosure shall be included in the scope of protection of the present disclosure.

## Claims

1. A method of shielding a base station signal, comprising:
searching for a base station signal sent by a target base station, wherein the target base station is a base station of which a communication connection is to be shielded;
acquiring a synchronization signal from a current frame of the base station signal and extracting a target Physical Broadcast Channel (PBCH) block Synchronization Signal Block (SSB) resource set;
generating a base station shielding signal according to the target SSB resource set; and
continuously sending the base station shielding signal for a target duration in a case where an SSB resource set of a next frame of the base station signal is aligned.

2. The method according to claim 1, wherein the generating a base station shielding signal according to the target SSB resource set comprises:
determining an initial shielding signal according to the target SSB resource set; and
amplifying a power of the initial shielding signal to a target power to obtain the base station shielding signal, wherein the target power is a power of an SSB with the maximum power in the target SSB resource set.

3. The method according to claim 2, wherein the determining an initial shielding signal according to the target SSB resource set comprises:
extracting, in a case where the target SSB resource set comprises an SSB resource set of each of a plurality of base stations, a mixed SSB resource set comprising a plurality of SSBs from the SSB resource set of each of the plurality of base stations as the initial shielding signal; and
determining an SSB resource set of one base station to be the initial shielding signal in a case where the target SSB resource set is the SSB resource set of the one base station.

4. The method according to claim 2, wherein the amplifying a power of the initial shielding signal to a target power to obtain the base station shielding signal comprises:
determining the target power from the target SSB resource set according to a signal attribute of the base station signal sent by the target base station; and
amplifying the power of the initial shielding signal to the target power to obtain the base station shielding signal.

5. The method according to claim 4, wherein the amplifying the power of the initial shielding signal to the target power to obtain the base station shielding signal comprises:
extracting other SSBs except the SSB with the maximum power from the initial shielding signal;
amplifying the power of the other SSBs to the target power to obtain other target SSBs; and
integrating the SSB with the maximum power and the other target SSBs into the base station shielding signal.

6. The method according to claim 1, wherein the continuously sending the base station shielding signal for a target duration in a case where an SSB resource set of a next frame of the base station signal is aligned comprises one of the following:
sending the base station shielding signal in advance by 1/4 of symbol time and continuously sending the base station shielding signal for the target duration in a case where the SSB resource set of the next frame of the base station signal is aligned, wherein the target duration is greater than or equal to an SSB period of the target base station; and
sending the base station shielding signal with a delay of 1/4 of symbol time and continuously sending the base station shielding signal for the target duration in a case where the SSB resource set of the next frame of the base station signal is aligned, wherein the target duration is greater than or equal to the SSB period of the target base station.

7. An apparatus of shielding a base station signal, comprising:
a search module, configured to search for a base station signal sent by a target base station, wherein the target base station is a base station of which a communication connection is to be shielded;
an extraction module, configured to acquire a synchronization signal from a current frame of the base station signal and extract a target Physical Broadcast Channel (PBCH) block Synchronization Signal Block (SSB) resource set;
a generation module, configured to generate a base station shielding signal according to the target SSB resource set; and
a sending module, configured to continuously send the base station shielding signal for a target duration in a case where an SSB resource set of a next frame of the base station signal is aligned.

8. The apparatus according to claim 7, wherein the generation module comprises:
a determination unit, configured to determine an initial shielding signal according to the target SSB resource set; and
an amplification unit, configured to amplify a power of the initial shielding signal to a target power to obtain the base station shielding signal, wherein the target power is the power of an SSB with the maximum power in the target SSB resource set.

9. A computer-readable storage medium, comprising a stored program, wherein the program performs the method according to any one of claims 1 to 6.

10. An electronic apparatus, comprising a memory and a processor, wherein the memory stores a computer program, and the processor is configured to perform the method according to any one of claims 1 to 6 through the computer program.
